# EUROPEAN PATENT APPLICATION

(11) **EP 2 163 968 A2**
(43) Date of publication of application: **17.03.2010**
(21) Application number: 09170030.2
(22) Date of filing: 11.09.2009
(51) Int. Cl.: G06F 1/32

(54) **IC chip, information processing device, information processing system, and programs**

(30) Priority: 11.09.2008 JP 2008233775
(71) Applicant: Sony Corporation, Minato-ku Tokyo 108-0075 (JP)
(72) Inventor: Kosaka, Hideo, Tokyo Tokyo 108-0075 (JP)
(74) Representative: Körber, Martin Hans

(57) **Abstract**

There is provided an IC chip mountable on a CE device including a processing unit which is supplied with power from the CE device and performs processing necessary for the operation of the IC chip, an RF signal detection unit which detects radio frequency signals transmitted from a reader/writer via contactless communication and outputs detection signals indicating detection status of radio frequency signals to the CE device, and a power supply control unit which controls power supply to a logic unit or the like from the CE device according to control signals input from the CE device in response to at least the detection signals. As a result, the IC chip can appropriately control power supply from the information processing device such as the CE device according to the control signals input from the information processing device in response to the detection signals.

## Description

### BACKGROUND OF THE INVENTION

### FIELD OF THE INVENTION

The present invention relates to an IC chip, an information processing device, an information processing system, and programs.

### DESCRIPTION OF THE RELATED ART

In recent years, there have been widely used IC chips (such as RFID modules) capable of transmitting and receiving data and reading and writing data via contactless communication, and there have been also developed information processing devices such as consumer electronics products (also referred to as CE devices hereinafter) on which an IC chip is mounted. With an IC chip, various processings, such as configuration processing, payment processing, or authentication processing, having become complicated due to high functionalization of CE devices can be easily operated, and convenience of users of CE devices can be improved.

An IC chip is configured to include an antenna for performing transmission and reception of radio frequency signals (also referred to as RF signals hereinafter), and a processing unit for performing processing necessary for the operation of the IC chip. The IC chip is configured to be mountable on a CE device, and drives the processing unit by power and signals provided from the CE device so as to perform various processings such as transmission and reception of data. This type of IC chip is also referred to as an IC chip with a wired terminal.

In the IC chip with a wired terminal in related art, power supply from the CE device is turned on or off according to turning on or off of the power of the CE device, or is controlled by the CE device.

### SUMMARY OF THE INVENTION

However, in the former case, as long as the power of the CE device is on, power is continuously supplied from the CE device to the IC chip, so that there was an issue that the power consumption of the CE device increases. In the latter case, there was an issue that the CE device is difficult to appropriately turn on or off the power supply to the IC chip according to the timing of transmitting and/or receiving data with an external device such as a reader/writer.

It is desirable to provide an IC chip, an information processing device, an information processing system, and programs, capable of reducing power consumption of the information processing device by appropriately controlling power supply from the information processing device to the IC chip.

According to a first embodiment of the present invention, there is provided an IC chip mountable on an information processing device including a processing unit which is supplied with power from the information processing device and performs processing necessary for the operation of the IC chip, a radio frequency signal detection unit which detects radio frequency signals transmitted from an external device via contactless communication and outputs detection signals indicating detection status of radio frequency signals to the information processing device, and a power supply control unit which controls power supply to the processing unit from the information processing device according to control signals input from the information processing device in response to at least the detection signals.

According to the configuration, the IC chip detects radio frequency signals from the external device, outputs the detection signals indicating detection status of radio frequency signals to the information processing device, and controls the power supply to the processing unit from the information processing device according to the control signals input from the information processing device in response to at least the detection signals. As a result, the IC chip can appropriately control the power supply from the information processing device according to the control signals input from the information processing device in response to the detection signals.

The radio frequency signal detection unit may be supplied with power based on the radio frequency signals transmitted from the external device to operate. As a result, since radio frequency signals are detectable by power based on the radio frequency signals (power via contactless power transmission), the power consumption of the information processing device can be reduced.

The radio frequency signal detection unit may be supplied with power, from the information processing device, to operate. As a result, since radio frequency signals are detectable by power from the information processing device, a configuration for performing the contactless power transmission can be omitted.

The power supply control unit may further control the power supply to the processing unit from the information processing device according to the control signals input from the information processing device in response to processing status of the processing unit. As a result, the power supply from the information processing device can be appropriately controlled according to the control signals input from the information processing device in response to the processing status of the processing unit.

According to a second embodiment of the present invention, there is provided an information processing device on which an IC chip can be mounted, including a power supply unit which can supply power to the IC chip, and a control unit which, when receiving from the IC chip detection signals indicating detection status of radio frequency signals transmitted from an external device via contactless communication, outputs to the IC chip, control signals for allowing the IC chip to control power supply to a processing unit of the IC chip from the power supply unit, in response to at least the detection signals. The IC chip includes a processing unit which is supplied with power from the information processing device and performs processing necessary for the operation of the IC chip, a radio frequency signal detection unit which detects radio frequency signals transmitted from the external device via contactless communication, and outputs to the information processing device the detection signals indicating detection status of radio frequency signals, and a power supply control unit which controls power supply to the processing unit from the information processing device according to the control signals input from the information processing device in response to at least the detection signals.

According to the configuration, the information processing device, when receiving from the IC chip detection signals indicating detection status of radio frequency signals transmitted from the external device via contactless communication, outputs to the IC chip, control signals for allowing the IC chip to control power supply to the processing unit of the IC chip from the power supply unit. As a result, the information processing device can allow the IC chip to appropriately control the power supply to the IC chip according to the control signals output to the IC chip in response to the detection signals.

The control unit may further output to the IC chip, the control signals for allowing the IC chip to control power supply to the processing unit from the power supply unit, in response to processing status of the processing unit. As a result, the power supply to the IC chip can be appropriately controlled by the IC chip according to the control signals output to the IC chip in response to the processing status of the IC chip.

The control unit may control power supply to the processing unit from the power supply unit in response to the detection signals or processing status of the processing unit. As a result, the power supply to the IC chip can be appropriately controlled.

According to a third embodiment of the present invention, there is provided an information processing system including the information processing device and the external device according to the second embodiment of the present invention. According to a fourth embodiment of the present invention, there is provided a program for allowing a computer to perform a method of power supply control that is applicable to the IC chip according to the first embodiment of the present invention. According to a fifth embodiment of the present invention, there is provided a program for allowing a computer to perform a method of power supply control that is applicable to the information processing device according to the second embodiment of the present invention.

According to the embodiment of the present invention, there can be provided, an IC chip, an information processing device, an information processing system, and programs, capable of reducing power consumption of the information processing device by appropriately controlling power supply from the information processing device to the IC chip.

### BRIEF DESCRIPTION OF THE DRAWINGS

FIG. 1 shows a configuration of an information processing system according to a present embodiment;
FIG. 2 shows a configuration example of an IC chip according to the present embodiment;
FIG. 3 is a sequence diagram showing the operation of the information processing system according to the present embodiment; and
FIG. 4 is a sequence diagram showing the operation of the information processing system according to the present embodiment.

### DETAILED DESCRIPTION OF THE INVENTION

Hereinafter, preferred embodiments of the present invention will be described in detail with reference to the appended drawings. Note that, in the specification and the appended drawings, structural elements that have substantially the same function and structure are denoted with the same reference numerals and repeated explanation of these structural elements is omitted.

### <Configuration of Information Processing System>

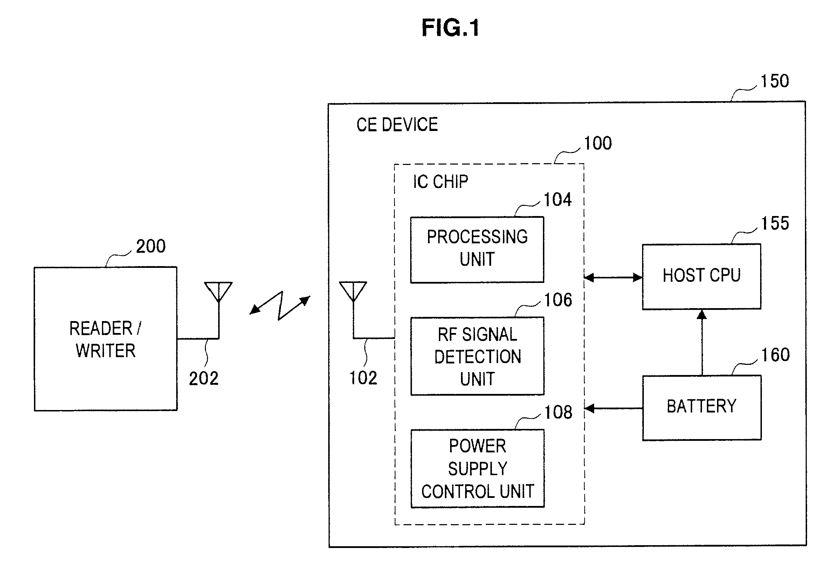

First, an information processing system according to an embodiment of the present invention will be described with reference to Fig. 1. FIG. 1 is a diagram showing a configuration of the information processing system according to the present embodiment.

As shown in Fig.1, the information processing system is configured to include a CE device 150 (an information processing device) on which an IC chip 100 is mounted and a reader/writer 200 (an external device).

The IC chip 100 is mounted on an information processing device such as the CE device 150 and used. The IC chip 100 is configured to include an antenna 102, a processing unit 104, an RF signal detection unit 106 and a power supply control unit 108.

The antenna 102 is used for transmitting and receiving data via contactless communication with an external device such as the reader/writer 200. The processing unit 104 is supplied with power and signals from the CE device 150 and performs processing necessary for the operation of the IC chip 100. The RF signal detection unit 106 detects RF signals transmitted from the reader/writer 200 and outputs detection signals indicating detection status of RF signals to the CE device 150 (a host CPU 155 described later). The power supply control unit 108 controls the power supply from the CE device 150 according to control signals input from the CE device 150 in response to at least the detection signals.

The CE device 150 is, and not limited to, a personal computer, a television receiver, an audio device, a cell phone, a wrist watch, a thermometer, a pedometer or the like. The CE device 150 is configured to include the host CPU 155 (a control unit) and a battery 160 (a power supply unit).

The host CPU 155 executes a program stored in a memory (not shown) or the like, thereby performing process control necessary for the operation of the CE device 150. The host CPU 155 receives the detection signals indicating detection status of RF signals from the IC chip 100 and outputs to the IC chip 100, the control signals for allowing the IC chip 100 to control the power supply to the IC chip 100 from the battery 160 in response to at least the detection signals. The battery 160 supplies power to the IC chip 100 and the host CPU 155 so as to drive the IC chip 100 and the host CPU 155.

The reader/writer 200 is connected to a control device (not shown) such as a personal computer and used. The reader/writer 200 has an antenna 202 used for transmitting and receiving data via contactless communication with the IC chip 100.

In the information processing system according to the embodiment, the IC chip 100 detects RF signals of the reader/writer 200 and outputs detection signals indicating detection status of RF signals to the CE device 150 (the host CPU 155). The CE device 150 receives the detection signals and outputs to the IC chip 100, control signals for allowing the IC chip 100 to control power supply to the IC chip 100 from the battery 160 in response to at least the detection signals. Then the IC chip 100 controls the power supply from the CE device 150 according to the input control signals. As a result, in the IC chip 100, the power supply from the CE device 150 is appropriately controlled according to the control signals input from the CE device 150 in response to at least the detection signals, and the power consumption of the CE device 150 can be reduced.

### <Configuration of IC Chip 100>

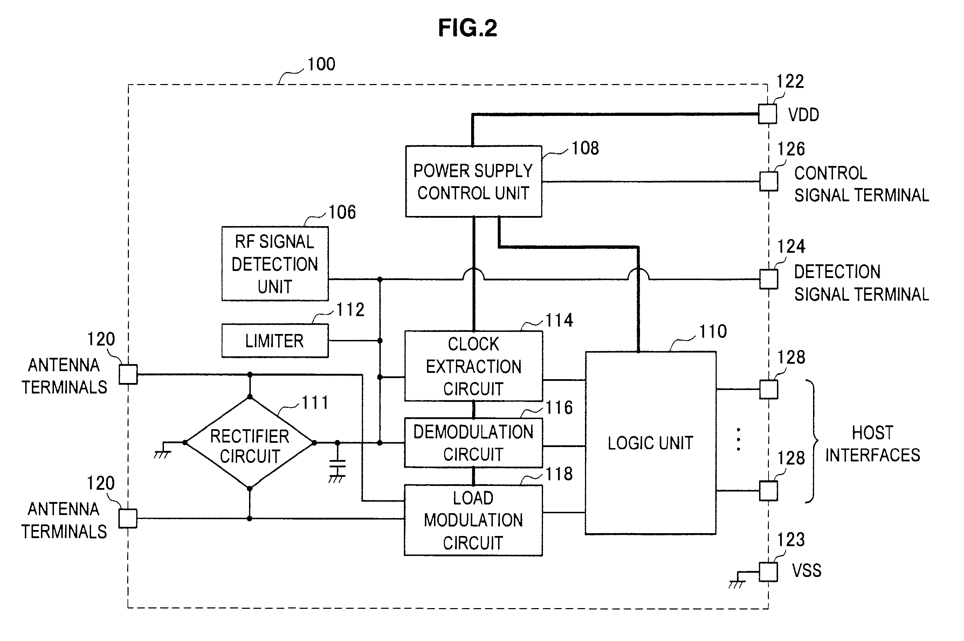

Next, the IC chip 100 according to the embodiment of the present invention will be described with reference to Fig.1 and Fig.2. FIG. 2 shows a configuration example of the IC chip 100 according to the present embodiment.

As shown in Fig.2, the IC chip 100 is configured to include the RF signal detection unit 106, the power supply control unit 108, a logic unit 110, a rectifier circuit 111, a limiter 112, a clock extraction circuit 114, a demodulation circuit 116 and a load modulation circuit 118. Here the power supply control unit 108, the logic unit 110, the clock extraction circuit 114, the demodulation circuit 116 and the load modulation circuit 118 make up the processing unit 104. In addition, the IC chip 100 is configured to include antenna terminals 120, power supply terminals (a VDD 122, a VSS 123), a detection signal terminal 124, a control signal terminal 126 and host interfaces 128.

The rectifier circuit 111 rectifies RF signals input from the antenna 102 via the antenna terminals 120, and outputs the rectified RF signals to the other circuit elements such as the demodulation circuit 116. The limiter 112 limits voltage between the antenna terminals 120 to a predetermined value. The clock extraction circuit 114 extracts clock signals from the RF signals via the rectifier circuit 111 and outputs the extracted clock signals to the logic unit 110 or the like. The demodulation circuit 116 demodulates the RF signals rectified via the rectifier circuit 111 after being input via the antenna terminals 120, and outputs the demodulated RF signals as data to the logic unit 110 or the like. The load modulation circuit 118 receives the data from the logic unit 110, modulates RF signals with load according to the input data, and outputs the modulated RF signals to the antenna 102 via the antenna terminals 120.

The RF signal detection unit 106 detects RF signals input via the antenna terminals 120 and outputs detection signals indicating detection status of RF signals to the host CPU 155 via the detection signal terminal 124. The RF signal detection unit 106 may be configured to be operable by using power generated from RF signals by a power generation circuit (not shown) as the operational power. In addition, the RF signal detection unit 106 may be configured to be operable by using power supplied from the battery 160 as its own operational power. In the former case, the power generation circuit including such as a voltage regulator may be configured to be part of the RF signal detection unit 106, or may be configured as a different circuit from the RF signal detection unit 106. In the latter case, a wire from the power terminal VDD 122 to the power supply control unit 108 is extended to the RF signal detection unit 106, for example, thereby the power is supplied from the battery 160.

The power supply control unit 108 generates, power for an analog circuit including the clock extraction circuit 114, the demodulation circuit 116 and the load modulation circuit 118 as well as power for the logic unit 110, from the power supplied from the battery 160 via the power terminal VDD 122 and VSS 123. The power supply control unit 108 turns on or off the power supply from the battery 160 to the logic unit 110, the clock extraction circuit 114, the demodulation circuit 116 and the load modulation circuit 118 according to the control signals input from the host CPU 155 via the control signal terminal 126.

The logic unit 110 performs predetermined processing to the data input from the demodulation circuit 116 and outputs the processed data to the host CPU 155, and performs predetermined processing to the data input from the host CPU 155 and outputs the processed data to the load modulation circuit 118. Between the logic unit 110 and the host CPU 155, data is input and output via the host interfaces 128. The following assumes that the logic unit 110 is configured as a wired logic, however the logic unit 110 may be configured as a CPU which operates by a program read out from the memory (not shown) or the like. When the logic unit 110 is configured as a CPU, the logic unit 110 may be configured to substitute the functions of the other elements of the circuit configuration as well as performing the abovementioned predetermined processing.

When the power supply from the battery 160 is off, only the rectifier circuit 111, the limiter 112 and the RF signal detection unit 106 operate. Here, the rectifier circuit 111 and the limiter 112 operate without power supply, and the RF signal detection unit 106 may operate with power generated from RF signals or may operate with power supplied from the battery 160.

On the other hand, when the power supply from the battery 160 is on, power is supplied, via the power supply control unit 108, from the battery 160 to the processing unit 104 including the logic unit 110, the rectifier circuit 111, the limiter 112, the clock extraction circuit 114, the demodulation circuit 116, the load modulation circuit 118 and the like which perform processing necessary for the operation of the IC chip 100.

### <Operation of Information Processing System>

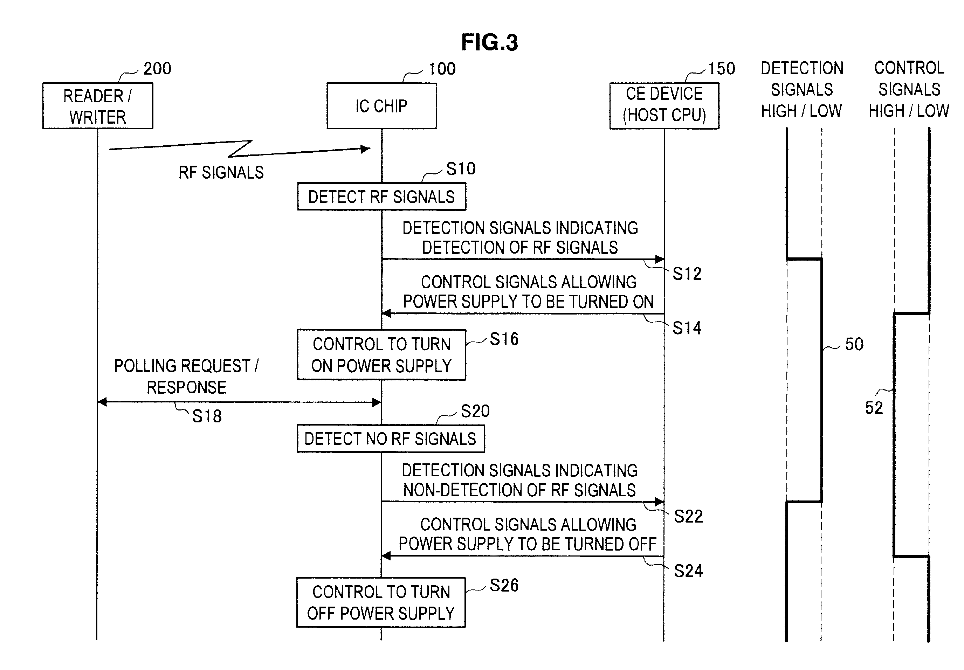

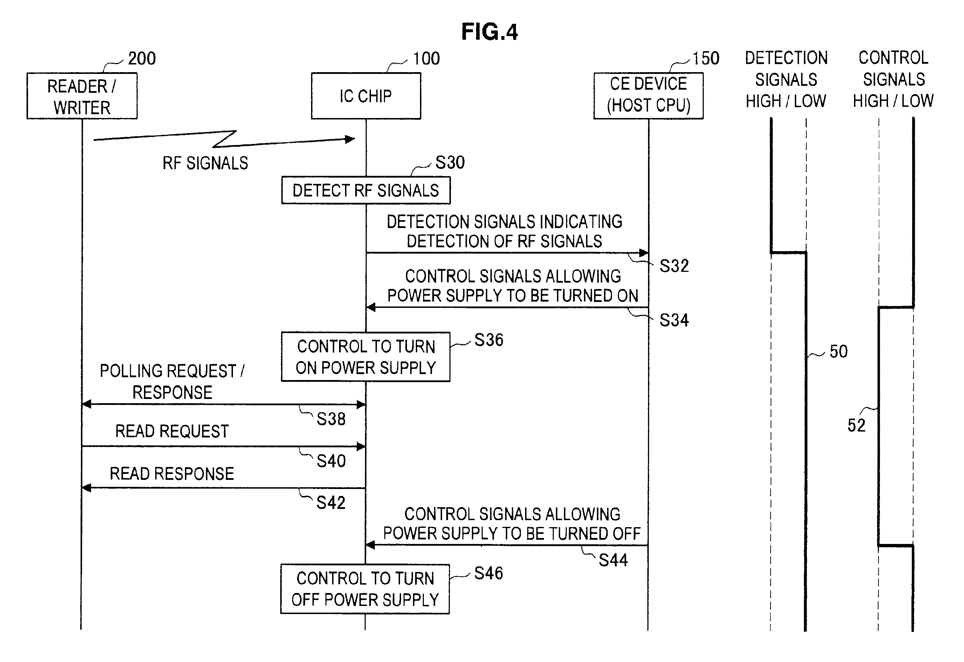

Next, an operation of the information processing system according to the embodiment of the present invention will be described with reference to Fig. 3 and Fig. 4. Fig. 3 and Fig. 4 are sequence diagrams showing the operation of the information processing system according to the present embodiment. Timing diagrams of detection signals 50 and control signals 52 are also provided in Fig. 3 and Fig. 4.

The operation shown in Fig. 3 will be described first. Here, it is assumed that power is supplied to the RF signal detection unit 106 of the IC chip 100. The power supply to the RF signal detection unit 106 may be performed via contactless power transmission of the reader/writer 200 in the state in which the CE device 150 is close to the reader/writer 200, or may be performed by the battery 160 of the CE device 150.

For example, when the CE device 150 is put close to the reader/writer 200, the IC chip 100 detects RF signals from the reader/writer 200 by the RF signal detection unit 106 (step S10). When detecting RF signals, the IC chip 100 outputs detection signals 50 indicating the detection of RF signals to the host CPU 155 by the RF signal detection unit 106 (S12).

When receiving the detection signals 50, the host CPU 155 outputs to the power supply control unit 108, control signals 52 for allowing power supply to the IC chip 100 from the battery 160 to be turned on (S14). The power supply control unit 108, when receiving the control signals 52, performs control for turning on the power supply from the battery 160 (S16). As a result, in the IC chip 100, power is supplied to the processing unit 104 which performs processing necessary for the operation of the IC chip 100.

Between the IC chip 100 and the reader/writer 200, data transmission/reception processing is performed via a polling request and a polling response (S18). During the steps S10 to S18, the IC chip 100 continuously outputs the detection signals 50 indicating the detection of RF signals to the host CPU 155, and the host CPU 155 continuously outputs to the power supply control unit 108 the control signals 52 for allowing the power supply from the battery 160 to be turned on (to be kept on).

After or in the middle of the data transmission/reception processing, when the CE device 150 is isolated from the reader/writer 200, for example, the IC chip 100 fails to detect RF signals from the reader/writer 200 by the RF signal detection unit 106 (S20). When failing to detect RF signals, the IC chip 100 outputs detection signals 50 indicating the non-detection of RF signals to the host CPU 155 by the RF signal detection unit 106 (S22).

When receiving the detection signals 50 indicating the non-detection of RF signals, the host CPU 155 outputs to the power supply control unit 108, control signals 52 for allowing the power supply to the IC chip 100 from the battery 160 to be turned off (S24). When receiving the control signals 52, the power supply control unit 108 performs control for turning off the power supply from the battery 160 (S26). As a result, in the IC chip 100, power is not supplied to the processing unit 104. In this state, the power supply to the RF signal detection unit 106 may or may not be performed by the battery 160.

Between the IC chip 100 and the reader/writer 200, the detection signals 50 and the control signals 52 are input and output as shown in timing diagrams, for example. In the timing diagrams, there is shown a case in which the detection signals 50 are low-active and the control signals are high-active. In this case, the detection signals 50 are switched to a low level when RF signals are detected, and switched to a high level when RF signals are not detected, and the control signals 52 are switched to a high level when power supply is on, and switched to a low level when power supply is off. The detection signals 50 may be set high-active and also, the control signals 52 may be set low-active.

That is, during detecting RF signals, the RF signal detection unit 106 outputs the detection signals 50 at the low level to the host CPU 155, and the host CPU 155, during the detection signals 50 being at the low level, outputs the control signals 52 at the high level to the power supply control unit 108. Then the power supply control unit 108, during the control signals 52 being at the high level, controls the power supply to the processing unit 104 from the battery 160 to be on.

On the other hand, during failing to detect RF signals, the RF signal detection unit 106 outputs the detection signals 50 at the high level to the host CPU 155, and the host CPU 155, during the detection signals 50 being at the high level, outputs the control signals 52 at the low level to the power supply control unit 108. Then the power supply control unit 108, during the control signals 52 being at the low level, controls the power supply to the processing unit 104 from the battery 160 to be off.

As a result, during RF signals from the reader/writer 200 being detected, the power is supplied to the processing unit 104 from the battery 160, and during RF signals from the reader/writer 200 being not detected, the power supply is stopped, so that the power supply from the CE device 150 can be appropriately controlled.

Next, the operation shown in Fig. 4 will be described. Since the steps S30 to S38 of the operation shown in Fig. 4 are the same as the steps S10 to S18 of the operation shown in Fig.3, a description thereof is omitted.

In the case of the operation shown in Fig. 4, between the IC chip 100 and the reader/writer 200, data transmission/reception processing is performed via read requests and read responses (S40, S42), and the data transmission/reception processing is terminated by the read responses from the IC chip 100.

When the data transmission/reception processing is terminated, the host CPU 155 judges that power does not need to be supplied to the processing unit 104, and outputs to the power supply control unit 108, the control signals 52 for allowing the power supply to the IC chip 100 from the battery 160 to be turned off (S44). Here, the IC chip 100 continuously outputs the detection signals 50 indicating the detection of RF signals to the host CPU 155.

When receiving the control signals 52, the power supply control unit performs control for turning off the power supply from the battery 160 (S46). As a result, in the IC chip 100, power is not supplied to the processing unit 104. In this state, the power supply to the RF signal detection unit 106 may be performed via contactless power transmission of the reader/writer 200 or by the battery 160, or may not be performed by either of them.

In the case of the operation shown in Fig. 4, when the data transmission/reception processing is terminated, the host CPU 155 switches the level of the control signals 52 to a low level and outputs them to the power supply control unit 108. Here, since RF signals are detected, the RF signal detection unit 106 continues outputting the detection signals 50 at the low level to the host CPU 155. When the control signals 52 turn to the low level, the power supply control unit 108 controls to turn off the power supply to the processing unit 104 from the battery 160.

As a result, while processing necessary for the operation of the IC chip 100 is performed, the power supply to the processing unit 104 from the battery 160 is performed, and the power supply is stopped when the processing is terminated, so that the power supply from the CE device 150 can be appropriately controlled.

Although preferred embodiments of the present invention are described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims or the equivalents thereof.

For example, in the description of the above embodiment, there is described a case in which the power supply control unit 108 indirectly controls the power supply from the battery 160 according to the control signals 52 input from the host CPU 155 in response to the detection signals 50 or the processing status of the processing unit 104. However, instead of the power supply control unit 108 controlling the power supply, the host CPU 155 may directly control the power supply from the battery 160. As a result, the power supply to the IC chip 100 can be appropriately controlled not on the side of the IC chip 100 but on the side of the CE device 150.
The present invention contains subject matter related to Japanese Priority Patent Application JP 2008-233775 filed in the Japan Patent Office on September 11, 2008, the entire contents of which being incorporated herein by reference.

## Claims

1. An IC chip mountable on an information processing device, comprising:
a processing unit which is supplied with power from the information processing device and performs processing necessary for the operation of the IC chip;
a radio frequency signal detection unit which detects radio frequency signals transmitted from an external device via contactless communication, and outputs detection signals indicating detection status of radio frequency signals to the information processing device; and
a power supply control unit which controls power supply to the processing unit from the information processing device according to control signals input from the information processing device in response to at least the detection signals.

2. The IC chip according to claim 1, wherein the radio frequency signal detection unit is supplied with power based on the radio frequency signals transmitted from the external device to operate.

3. The IC chip according to claim 1 or 2, wherein the radio frequency signal detection unit is supplied with power, from the information processing device, to operate.

4. The IC chip according to claim 1, 2 or 3, wherein the power supply control unit further controls power supply to the processing unit from the information processing device according to the control signals input from the information processing device in response to processing status of the processing unit.

5. An information processing device on which an IC chip can be mounted, comprising:
a power supply unit which can supply power to the IC chip; and
a control unit which receives from the IC chip detection signals indicating detection status of radio frequency signals transmitted from an external device via contactless communication and outputs to the IC chip, control signals for allowing the IC chip to control power supply to a processing unit of the IC chip from the power supply unit in response to at least the detection signals, wherein
the IC chip includes
a processing unit which is supplied with power from the information processing device and performs processing necessary for the operation of the IC chip,
a radio frequency signal detection unit which detects radio frequency signals transmitted from the external device via contactless communication, and outputs to the information processing device the detection signals indicating detection status of radio frequency signals, and
a power supply control unit which controls power supply to the processing unit from the information processing device according to the control signals input from the information processing device in response to at least the detection signals.

6. The information processing device according to claim 5, wherein the control unit further outputs to the IC chip, the control signals for allowing the IC chip to control power supply to the processing unit from the power supply unit, in response to processing status of the processing unit.

7. The information processing device according to claim 5 or 6, wherein the control unit controls power supply to the processing unit from the power supply unit in response to the detection signals or processing status of the processing unit.

8. An information processing system comprising an information processing device on which an IC chip can be mounted and an external device, wherein
the information processing device includes
a power supply unit which can supply power to the IC chip, and
a control unit which receives from the IC chip detection signals indicating detection status of radio frequency signals transmitted from an external device via contactless communication and outputs to the IC chip, control signals for allowing the IC chip to control power supply to a processing unit of the IC chip from the power supply unit in response to at least the detection signals, wherein
the IC chip includes
a processing unit which is supplied with power from the information processing device and performs processing necessary for the operation of the IC chip,
a radio frequency signal detection unit which detects radio frequency signals transmitted from the external device via contactless communication, and outputs to the information processing device the detection signals indicating detection status of radio frequency signals, and
a power supply control unit which controls power supply to the processing unit from the information processing device according to the control signals input from the information processing device in response to at least the detection signals; and
the external device includes
a contactless communication unit which performs contactless communication with the IC chip.

9. A program for allowing a computer to perform a method of power supply control that is applicable to an IC chip mountable on an information processing device, wherein
the method of power supply control includes a step of, when detection signals indicating detection status of radio frequency signals transmitted from an external device to the IC chip via contactless communication is output from the IC chip to the information processing device, controlling power supply from the information processing device for performing processing necessary for the operation of the IC chip according to control signals input from the information processing device in response to at least the detection signals.

10. A program for allowing a computer to perform a method of power supply control that is applicable to an information processing device on which an IC chip can be mounted, wherein
the method of power supply control includes a controlling step of, in the information processing device, receiving from the IC chip detection signals indicating detection status of radio frequency signals transmitted from an external device via contactless communication, outputting to the IC chip, control signals for allowing the IC chip to control power supply from the information processing device for performing processing necessary for the operation of the IC chip in response to at least the detection signals.
